# EUROPEAN PATENT APPLICATION

(11) **EP 4 382 567 A1**
(43) Date of publication of application: **12.06.2024**
(21) Application number: 22853200.8
(22) Date of filing: 05.08.2022
(51) Int. Cl.: C08L 21/00, C08K 5/18, C08K 5/3437

(54) **TIRE RUBBER COMPOSITION, AND TIRE**

(30) Priority: 06.08.2021 JP 2021130358
(71) Applicant: BRIDGESTONE CORPORATION, Chuo-ku Tokyo 104-8340 (JP)
(72) Inventor: SAITO, Kosuke, Tokyo 104-8340 (JP)
(74) Representative: Marks & Clerk LLP
(86) International application number: PCT/JP2022/030191
(87) International publication number: WO 2023/013782

(57) **Abstract**

Provided is a rubber composition for tires with excellent ozone resistance and high retention rates of elongation at break (EB) and tensile strength (TB) after aging even without using the age resistor 6PPD. The rubber composition contains an amine-based age resistor represented by the general formula (1): 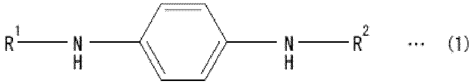 where R¹ and R² being each independently a monovalent saturated hydrocarbon group; and a quinoline-based age resistor. The mass ratio of the content of the quinoline-based age resistor to the content of the amine-based age resistor (content of the quinoline-based age resistor/content of the amine-based age resistor) is 0.05 to 0.2.

## Description

### TECHNICAL FIELD

The present disclosure relates to a rubber composition for tires and a tire.

### BACKGROUND

In general, various rubber members forming a tire degrade due to the effect of the outside air environment, such as the presence of ozone. As the degradation progresses, it can lead to the formation of cracks or the like. To address this issue, rubber compositions containing an age resistor are often applied to the various rubber members forming a tire.

For example, PTL 1 described below discloses that by applying a rubber composition containing a specific quinoline-based age resistor and N-phenyl-N'-(1,3-dimethylbutyl)-p-phenylenediamine (age resistor 6PPD) to the rubber constituting the surface of a tire, cracks and discoloration on the tire surface can be suppressed.

### CITATION LIST

PTL 1: WO 2018/056384 A1

### SUMMARY

### (Technical Problem)

However, N-phenyl-N'-(1,3-dimethylbutyl)-p-phenylenediamine (age resistor 6PPD) used in PTL 1 mentioned above may have an environmental impact, and it has thus been demanded to use an age resistor with a lower environmental impact, considering factors such as the possibility of future regulations under European legislation.

To address this, the technologies without using the age resistor 6PPD in the rubber composition could be considered. However, we have conducted studies and discovered that using only quinoline-based age resistors without using the age resistor 6PPD resulted in a decrease in ozone resistance of the rubber composition. Moreover, the durability of the rubber composition after aging, especially the elongation at break (EB) and tensile strength (TB), was significantly reduced.

To solve the aforementioned problem of conventional techniques, it would be helpful to provide a rubber composition for tires with excellent ozone resistance and high retention rates of elongation at break (EB) and tensile strength (TB) after aging even without using the age resistor 6PPD.

It would also be helpful to provide a tire with excellent ozone resistance and excellent durability after aging.

### (Solution to Problem)

As a result of researches to solve the aforementioned problem, we have discovered that ozone resistance of the rubber composition can be sufficiently ensured and the decreases in elongation at break (EB) and tensile strength (TB) of the rubber composition after aging can be suppressed by using an amine-based age resistor with a certain structure and a quinoline-based age resistor in combination while optimally adjusting the mass ratio of the amount of the amine-based age resistor to the amount of the quinoline-based age resistor.

Specifically, the rubber composition for tires of the present disclosure includes
a rubber component;
an amine-based age resistor represented by the following general formula (1): 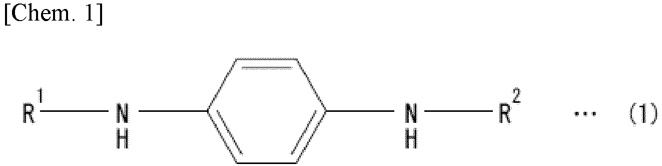 where R¹ and R² being each independently a monovalent saturated hydrocarbon group; and
a quinoline-based age resistor,
wherein a mass ratio of a content of the quinoline-based age resistor to a content of the amine-based age resistor (content of the quinoline-based age resistor/content of the amine-based age resistor) is 0.05 to 0.2.

The rubber composition for tires of the present disclosure has excellent ozone resistance and high retention rates of elongation at break (EB) and tensile strength (TB) after aging.

A tire of the present disclosure includes the above-mentioned rubber composition of the present disclosure.

This tire according to the present disclosure has excellent ozone resistance and excellent durability after aging.

### (Advantageous Effect)

### (Advantageous Effect)

The present disclosure may provide a rubber composition for tires with excellent ozone resistance and high retention rates of elongation at break (EB) and tensile strength (TB) after aging even without using the age resistor 6PPD.

The present disclosure may also provide a tire with excellent ozone resistance and excellent durability after aging.

### DETAILED DESCRIPTION

The rubber composition for tires and the tire of the present disclosure are described below in detail with reference to embodiments thereof.

### <Rubber composition for tires>

The rubber composition for tires of the present disclosure includes a rubber component, an amine-based age resistor represented by the following general formula (1): 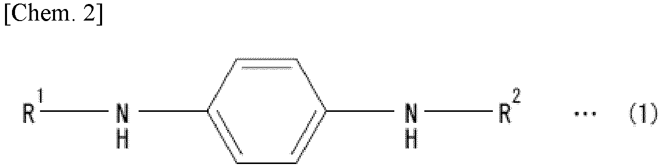 where R¹ and R² being each independently a monovalent saturated hydrocarbon group (hereinafter simply referred to as "amine-based age resistor"), and a quinoline-based age resistor.

Additionally, in the rubber composition for tires of the present disclosure, the mass ratio of the content of the quinoline-based age resistor to the content of the amine-based age resistor (content of the quinoline-based age resistor/content of the amine-based age resistor) is 0.05 to 0.2.

By using the amine-based age resistor represented by the above general formula (1) and the quinoline-based age resistor in combination while setting the mass ratio of the content of the quinoline-based age resistor to the content of the amine-based age resistor in the above range (0.05 to 0.2), ozone resistance of the rubber composition can be sufficiently ensured and the decreases in elongation at break (EB) and tensile strength (TB) of the rubber composition after aging can be suppressed. Note that, if the mass ratio of the content of the quinoline-based age resistor to the content of the amine-based age resistor is less than 0.05, sufficient elongation at break (EB) and tensile strength (TB) after aging are not obtained although high ozone resistance can be ensured. On the other hand, if the mass ratio exceeds 0.2, sufficient ozone resistance cannot be achieved although the elongation at break (EB) and tensile strength (TB) after aging are good.

Accordingly, the rubber composition for tires of the present disclosure has excellent ozone resistance and high retention rates of elongation at break (EB) and tensile strength (TB) after aging.

In addition, in the rubber composition for tires of the present disclosure, by setting the mass ratio of the content of the quinoline-based age resistor to the content of the amine-based age resistor (content of the quinoline-based age resistor/content of the amine-based age resistor) from 0.05 to 0.2, the adverse effects on rubber properties other than ozone resistance (heat generation property etc.) can be also suppressed, which makes the composition suitable for tire applications.

Furthermore, from the viewpoint of increasing the ozone resistance of the rubber composition and further increasing the maintenance rates of elongation at break (EB) and tensile strength (TB) after aging while suppressing adverse effects on rubber properties other than ozone resistance, the mass ratio of the content of the quinoline-based age resistor to the content of the amine-based age resistor (content of the quinoline-based age resistor/content of the amine-based age resistor) is preferably 0.10 to 0.2, and more preferably 0.14 to 0.18.

Hereinafter, each component constituting the rubber composition of the present disclosure will be described.

### (Rubber component)

The rubber composition for tires of the present disclosure contains a rubber component, and the rubber component provides rubber elasticity to the composition.

As the rubber component, diene-based rubber is preferred, and isoprene skeleton rubber, styrene-butadiene rubber (SBR), butadiene rubber (BR), and chloroprene rubber (CR) are more preferred. As used herein, isoprene skeleton rubber refers to rubber with isoprene units as the main skeleton thereof, examples thereof specifically include natural rubber (NR) and synthetic isoprene rubber (IR). When the rubber component includes at least one selected from the group consisting of isoprene skeleton rubber, styrene-butadiene rubber, butadiene rubber, and chloroprene rubber, the rubber composition has excellent rubber elasticity and becomes more suitable for tire applications.

Moreover, when the rubber component includes at least one selected from the group consisting of isoprene skeleton rubber, styrene-butadiene rubber, butadiene rubber, and chloroprene rubber, the effects of the present disclosure (improvement in ozone resistance by the combined use of the amine-based age resistor and the quinoline-based age resistor, and effects in suppressing the decreases in elongation at break (EB) and tensile strength (TB) after aging) are likely to be prominently achieved. The content of diene rubber, such as isoprene skeleton rubber, styrene-butadiene rubber, butadiene rubber, and chloroprene rubber, in the rubber component is preferably 80 mass% or more, more preferably 90 mass% or more, and may be 100 mass%. One of the above-mentioned rubber components may be used individually, or two or more of them may be used as a blend.

### (Amine-based age resistor)

The rubber composition for tires of the present disclosure contains an amine-based age resistor represented by the general formula (1).

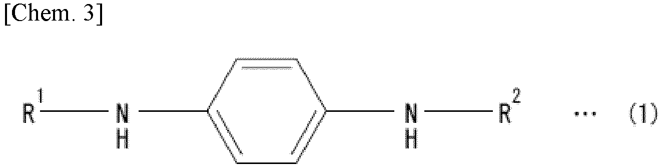

Although the amine-based age resistor represented by the general formula (1) contains a phenylenediamine moiety similar to N-phenyl-N'-(1,3-dimethylbutyl)-p-phenylenediamine (age resistor 6PPD), it differs from the age resistor 6PPD in that it has no double bond other than the phenylenediamine moiety. This results in a lower environmental impact.

Additionally, the amine-based age resistor represented by the general formula (1) has the effects of improving the ozone resistance of the rubber composition and suppressing the decreases in the retention rates of elongation at break (EB) and tensile strength (TB) after aging.

Here, in the above general formula (1), R¹ and R² are each independently a monovalent saturated hydrocarbon group. R¹ and R² can be the same or different, but from a synthetic point of view, they are preferably the same.

In addition, the number of carbon atoms of the monovalent saturated hydrocarbon group is preferably 1 to 20, more preferably 3 to 10, and particularly preferably 6 and 7. When the number of carbons of saturated hydrocarbon groups is 20 or less, the moles per unit mass are increased, which enhances the age resisting effect and improves the ozone resistance of the rubber composition.

Furthermore, from the viewpoint of further improving the ozone resistance of the rubber composition, R¹ and R² in the above general formula (1) are each independently preferably a chain or cyclic monovalent saturated hydrocarbon group having 1 to 20 carbon atoms.

Here, examples of the monovalent saturated hydrocarbon group include alkyl groups and cycloalkyl groups. The alkyl groups may be linear or branched, and the cycloalkyl groups may further have alkyl groups, etc. attached as substituents.

Examples of the alkyl groups include a methyl group, an ethyl group, an n-propyl group, an isopropyl group, an n-butyl group, an isobutyl group, a sec-butyl group, a tert-butyl group, an n-pentyl group, a neopentyl group, a 1-methylpentyl group, a 2-methylpentyl group, a 3-methylpentyl group, a 4-methylpentyl group, a 1,2-dimethylpentyl group, a 1,3-dimethylpentyl group, a 1,4-dimethylpentyl group, a 2,3-dimethylpentyl group, a 2,4-dimethylpentyl group, a 3,4-dimethylpentyl group, an n-hexyl group, a 1-methylhexyl group, a 2-methylhexyl group, octyl groups, decyl groups, dodecyl groups, for example, of which a 1,4-dimethylpentyl group is preferred.

Examples of the cycloalkyl group include a cyclopentyl group, methylcyclopentyl groups, a cyclohexyl group, a methylcyclohexyl group, a cycloheptyl group, and a cyclooctyl group, for example, of which a cyclohexyl group is preferred.

Moreover, examples of the amine-based age resistor represented by the above general formula (1) specifically include N,N'-bis(1,4-dimethylpentyl)-p-phenylenediamine (age resistor 77PD), N,N'-bis(1-ethyl-3-methylpentyl)-p-phenylenediamine, and N,N'-dicyclohexyl-p-phenylenediamine (age resistor CCPD). Among these, N,N'-bis(1,4-dimethylpentyl)-p-phenylenediamine (age resistor 77PD) and N,N'-dicyclohexyl-p-phenylenediamine (CCPD) are preferred, and N,N'-bis(1,4-dimethylpentyl)-p-phenylenediamine (age resistor 77PD) is particularly preferred. The above-mentioned amine-based age resistors may be used alone or in combination of two or more.

In addition, the amount of the amine-based age resistor is not particularly limited, but is preferably 0.1 to 11 parts by mass per 100 parts by mass of the rubber component. When the content of amine-based age resistor is 0.1 parts by mass or more per 100 parts by mass of the rubber component, ozone resistance of the rubber composition can be sufficiently ensured and the decreases in elongation at break (EB) and tensile strength (TB) of the rubber composition after aging can be sufficiently suppressed. On the other hand, when the content of amine-based age resistor is 11 parts by mass or less per 100 parts by mass of the rubber component, the adverse effects on rubber properties other than ozone resistance (heat generation property etc.) can be more effectively suppressed, which makes the composition suitable for tire applications.

The content of the amine-based age resistor is more preferably 1 part by mass or more, even more preferably 2 parts by mass or more, and particularly preferably 3 parts by mass or more per 100 parts by mass of the rubber component from the viewpoint of enhancing ozone resistance. Furthermore, the content of the amine-based age resistor is more preferably 10.5 parts by mass or less, even more preferably 10 parts by mass or less from the viewpoint of suppressing adverse effects on other rubber properties.

### (Quinoline-based age resistor)

The rubber composition for tires contains a quinoline-based age resistor. The quinoline-based age resistor is an age resistor having a quinoline moiety or a derivative moiety thereof (such as a dihydroquinoline moiety).

The inclusion of the quinoline-based age resistor in the rubber composition for tires has the effects of improving the ozone resistance and suppressing the decreases in the retention rates of elongation at break (EB) and tensile strength (TB) after aging.

The quinoline-based age resistor preferably has a dihydroquinoline moiety, and more preferably has a 1,2-dihydroquinoline moiety.

Specifically, examples of the quinoline-based age resistor include a polymer of 2,2,4-trimethyl-1,2-dihydroquinoline (age resistor TMDQ), 6-ethoxy-2,2,4-trimethyl-1,2-dihydroquinoline, and 6-anilino-2,2,4-trimethyl-1,2-dihydroquinoline.

The quinoline-based age resistor preferably contains a polymer of 2,2,4-trimethyl-1,2-dihydroquinoline (age resistor TMDQ). A quinoline-based age resistor containing a polymer of 2,2,4-trimethyl-1,2-dihydroquinoline is highly effective in improving the ozone resistance of the rubber composition, and also has the advantage of being less prone to causing discoloration of the rubber composition.

Note that examples of the polymer of 2,2,4-trimethyl-1,2-dihydroquinoline include a dimer, trimer, and tetramer of 2,2,4-trimethyl-1,2-dihydroquinoline.

There is no specific limitation on the content of the quinoline-based age resistor, as long as the mass ratio of the content of the quinoline-based age resistor to the content of the amine-based age resistor described above is within the range of 0.05 to 0.2.

For example, from the viewpoint of effectively suppressing adverse effects on rubber properties other than ozone resistance, sufficiently ensuring ozone resistance, and sufficiently suppressing the decreases in elongation at break (EB) and tensile strength (TB) of the rubber composition after aging, the content of the quinoline-based age resistor is preferably 0.1 to 5 parts by mass per 100 parts by mass of the rubber component. When the content of quinoline-based age resistor is 0.1 parts by mass or more per 100 parts by mass of the rubber component, ozone resistance of the rubber composition can be sufficiently ensured and the decreases in elongation at break (EB) and tensile strength (TB) of the rubber composition after aging can be sufficiently suppressed. On the other hand, when the content of quinoline-based age resistor is 5 parts by mass or less per 100 parts by mass of the rubber component, the adverse effects on rubber properties other than ozone resistance (heat generation property etc.) are suppressed, which makes the composition suitable for tire applications.

Furthermore, from the viewpoint of enhancing ozone resistance, the amount of the quinoline-based age resistor is more preferably 0.3 parts by mass or more, even more preferably 0.5 parts by mass or more per 100 parts by mass of the rubber component. Furthermore, from the viewpoint of more effectively suppressing adverse effects on other rubber properties, the amount is more preferably 4 parts by mass or less, even more preferably 3 parts by mass or less per 100 parts by mass of the rubber component.

### (Wax)

The rubber composition for tires of the present disclosure preferably contains a wax. When the rubber composition for tires contains a wax, the ozone resistance is further improved.

Examples of the wax include paraffin wax and microcrystalline wax.

The content of the wax is not particularly limited, but is preferably 0.1 to 5 parts by mass per 100 parts by mass of the rubber component. When the content of the wax is 0.1 parts by mass or more per 100 parts by mass of the rubber component, the ozone resistance of the rubber composition is further improved. Furthermore, when the content of the wax is 5 parts by mass or less per 100 parts by mass of the rubber component, the effects on rubber properties other than ozone resistance are small.

From the viewpoint of enhancing ozone resistance, the amount of the wax is more preferably 0.5 parts by mass or more, even more preferably 1 part by mass or more per 100 parts by mass of the rubber component. Furthermore, from the viewpoint of more effectively suppressing adverse effects on other rubber properties, the amount is more preferably 4 parts by mass or less, even more preferably 3 parts by mass or less per 100 parts by mass of the rubber component.

### (Sulfur)

The rubber composition for tires of the present disclosure preferably contains sulfur. The inclusion of sulfur in the rubber composition enables vulcanization and improves the durability (particularly elongation at break (EB) and tensile strength (TB)) of the rubber composition.

Various types of sulfur can be used as the sulfur, but generally-used sulfur (e.g., soluble sulfur (powdered sulfur)) is preferred over insoluble sulfur and oil-treated sulfur is also preferred. As used herein, insoluble sulfur is sulfur that is insoluble in carbon disulfide (amorphous polymeric sulfur), and soluble sulfur (powdered sulfur) is sulfur that is soluble in carbon disulfide.

The content of the sulfur is preferably in a range of 0.1 to 10 parts by mass and even preferably in a range of 1 to 5 parts by mass per 100 parts by mass of the rubber component. When the content of sulfur is 0.1 parts by mass or more per 100 parts by mass of the rubber component, more excellent durability of vulcanized rubber can be secured, and when the content is 10 parts by mass or less per 100 parts by mass of the rubber component, more excellent rubber elasticity can be ensured.

### (Other components)

In addition to the rubber component, the amine-based age resistor, the quinoline-based age resistor, the wax, and the sulfur mentioned above, the rubber composition for tires of the present disclosure may contain various components (other components) normally used in the rubber industry as needed. As other components, for example, fillers such as silica and carbon black, silane coupling agents, softeners, processing aids, stearic acid, zinc oxide, vulcanization accelerators, and vulcanization agents other than sulfur, for example, may be selected as appropriate and included in a range not impairing the object of the present disclosure. Commercial products are suitable for use as these compounding agents.

Note that the amine-based age resistor represented by the above general formula (1) may be supported on any carrier. For example, the amine-based age resistor represented by the above general formula (1) may be supported on an inorganic filler such as silica and calcium carbonate.

Furthermore, the amine-based age resistor represented by the above general formula (1) may be a master batch with the rubber component. Here, the rubber component used to produce the master batch is not limited, and may be diene rubber such as natural rubber (NR), or ethylene-propylene-diene rubber (EPDM), or the like.

Furthermore, the amine-based age resistor represented by the above general formula (1) may also be a salt with an organic acid. Here, the organic acid used to form the salt is not particularly limited, and examples include stearic acid.

### (Method of manufacturing rubber composition for tires)

The method of manufacturing the rubber composition of the present disclosure is not particularly limited, but the rubber composition can be manufactured, for example, by blending the rubber component, the amine-based age resistor, and the quinoline-based age resistor mentioned above with various preferable components and other components selected as needed, and then kneading, warming, extruding, etc.

Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, which are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc. for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, 100 to 190 °C.

### <Tire>

The tire of the present disclosure includes the rubber composition for tires of the present disclosure described above.

Accordingly, the tire of the present disclosure has excellent ozone resistance and excellent durability after aging.

There is no particular limitation on the area to which the rubber composition for tires is applied. For example, it can be used in at least one of the tread portion, shoulder portion, sidewall portion, bead portion, belt layer (belt coating rubber), and carcass (ply coating rubber).

In accordance with the type of tire to be applied, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. The tire of the present disclosure is preferably a pneumatic tire. The pneumatic tire may be filled with ordinary air or air with an adjusted partial pressure of oxygen, or may also be filled with an inert gas such as nitrogen, argon, or helium.

### EXAMPLES

The present disclosure is described in more detail below with reference to Examples, by which the present disclosure is not intended to be limited in any way.

### <Example 3 and Comparative Example 2>

Rubber compositions were produced according to the formulations summarized in Tables 1 and 2.

### <Examples 1 to 2 and Comparative Examples 1 and 3>

Rubber compositions are produced according to the formulations summarized in Tables 1 and 2.

Note that Examples 1 and 2, and Comparative Examples 1 and 3 are predictive data.

**[Table 1]**

| | Amount (parts by mass) |
|---|---|
| NR *1 | 35 |
| SBR *2 | 77 |
| Carbon black *4 | 6 |
| Silica* 5 | 58 |
| Wax *6 | 1.7 |
| Age resister 77PD *7 | See Table 2 |
| Age resistor | |
| Age resister 6PPD *9 | |
| Sulfur *10 | 2.0 |
| Other agents*3 | 24.5 |

| | |
|---|---|
| * 1 NR: natural rubber *2 SBR: total content of styrene-butadiene rubber [bound styrene content = 20 mass%, vinyl bond content in a butadiene moiety = 55 mass%, glass transition temperature (Tg) = -40 °C] and oil-extended rubber of styrene-butadiene rubber [bound styrene content = 45 mass%, vinyl bond content in a butadiene moiety = 19 mass%, glass transition temperature (Tg) = -30 °C], of which 12 parts by mass was oil-extended total amount of agents containing at least trade name "ABC-856" manufactured by Shin-Etsu Chemical Co., Ltd. as a silane coupling agent, trade name "Kiri-jirushi stearic acid" manufactured by NOF Corporation as stearic acid, zinc oxide manufactured by HakusuiTech Co., Ltd., trade name "Sanceler CM-G" manufactured by Sanshin Chemical Industry Co., Ltd. as an accelerator, and trade name "MS-95" manufactured by Kao Corporation as a surfactant *4 carbon black: trade name "Asahi #78" manufactured by Asahi Carbon Co., Ltd. *5 silica: trade name "Nipseal AQ" manufactured by Tosoh Silica Corporation *6 wax: total amount of microcrystalline wax, trade name "Ozoace-0701" manufactured by Nippon Seiro Co., Ltd. and trade name "Ozoace-0301" manufactured by Nippon Seiro Co., Ltd. *7 age resistor 77PD: N,N'-bis(1,4-dimethylpentyl)-p-phenylenediamine, trade name "Santoflex 77PD" manufactured by EASTMAN Chemical Company as an amine-based age resistor *8 age resistor TMDQ: polymer of 2,2,4-trimethyl-1,2-dihydroquinoline, trade name "NONFLEX RD" manufactured by Seiko-Chemical Co., Ltd. as a quinoline-based age resistor *9 age resistor 6PPD: N-(1,3-dimethylbutyl)-N'-phenyl-1,4-phenylenediamine, trade name "Antigen 6C" manufactured by Sumitomo Chemical Co., Ltd. as an amine-based age resistor *10 sulfur: trade name "HK200-5" manufactured by Hosoi Chemical Industry Co., Ltd., 5% oil | |

### <Evaluation>

The retention rates of elongation at break (EB) and tensile strength (TB) after aging and ozone resistance of the obtained composition were evaluated by the following methods. The results are listed in Table 2.

### (1) Retention rates of elongation at break (EB) and tensile strength (TB) after aging

The rubber composition was vulcanized to prepare vulcanized rubber test pieces. A tensile test was conducted on the test pieces immediately after fabrication in accordance with JIS K 6251 to measure initial elongation at break (EB) and tensile strength (TB).

Then, the vulcanized rubber test pieces were then aged by allowing to stand at 100 °C for 24 hours, and a tensile test was conducted on the aged test pieces in accordance with JIS K 6251 to measure elongation at break (EB) and tensile strength (TB) after aging.

The retention rates of elongation at break (EB) and tensile strength (TB) after aging were then calculated from the initial elongation at break (EB) and tensile strength (TB) and the elongation at break (EB) and tensile strength (TB) after aging according to the following formulae. Retention rate of elongation at break (EB) after aging = elongation at break (EB) after aging / initial elongation at break (EB) × 100 (%) Retention rate of tensile strength (TB) after aging = Tensile strenght (TB) after aging / initial tensile strength (TB) × 100 (%)

### (2) Ozone resistance

A dynamic ozone degradation test (test in which a strain was applied repeated) and a static ozone degradation test (test in which a certain strain was applied and the sample was left to stand) were conducted in accordance with JIS K 6259-1 to evaluate ozone resistance. The evaluation was made by rating and classifying based on the number of cracks according to the following criteria (A to C), as well as rating and classifying based on the size and depth of the cracks according to the following criteria (1 to 5).

The evaluation results are indicated in Table 2 by connecting the rating based on the number of cracks and the rating based on depth by a hyphen, such as "A-1", "B-2", for example,.

### (2-1) Rating based on number of cracks

A: A few cracks observed
B: A lot of cracks observed
C: A countless cracks observed

### (2-2) Rating based on size and depth of cracks

1: Crack not visible to the naked eye, but observable under a 10× magnifying glass.
2: Crack visible to the naked eye.
3: Deep, relatively large crack (measuring less than 1 mm).
4: Deep, large crack (measuring 1 mm or longer and less than 3 mm).
5: Crack measuring 3 mm or longer, or test piece likely to be severed

**[Table 2]**

| | | | | Comp. Ex.1 | Example 1 | Example 2 | Example 3 | Comp. Ex.2 | Comp. Ex.3 |
|---|---|---|---|---|---|---|---|---|---|
| Content of age resistor | Age resister 77PD *7 | | parts by mass | 4 | 4 | 9 | 3.65 | 3.04 | - |
| | Age resistor | | | - | 0.2 | 1.5 | 0.72 | 0.72 | 1.5 |
| | Age resister 6PPD *9 | | | - | - | - | - | - | 9 |
| Age resistor TMDQ/ age resistor 77PD | | | - | 0.00 | 0.05 | 0.17 | 0.20 | 0.24 | 0.17 |
| Evaluation results | Retention rate of EB after aging | | % | 70 | 77 | 81 | 82 | 77 | 70 |
| | Retention rate of TB after aging | | % | 84 | 92 | 95 | 96 | 92 | 84 |
| | Ozone resistance | Dynamic ozone degradation test | - | A-1 | A-1 | A-1 | A-1 | B-2 | A-1 |
| | | Static ozone deterioration test | - | A-3 | A-3 | A-4 | A-4 | B-4 | A-3 |

The results in Table 2 indicate that all of the rubber compositions of Examples had excellent ozone resistance and high retention rates of elongation at break (EB) and tensile strength (TB) after aging. On the other hand, in the rubber compositions in Comparative Examples, at least one of the ozone resistance and the retention of elongation rates at break (EB) and tensile strength (TB) after aging were inferior to those of Examples.

### INDUSTRIAL APPLICABILITY

The present disclosure may provide a rubber composition for tires with excellent ozone resistance and high retention rates of elongation at break (EB) and tensile strength (TB) after aging even without using the age resistor 6PPD.

The present disclosure may also provide a tire with excellent ozone resistance and excellent durability after aging.

## Claims

1. A rubber composition for tires comprising:
a rubber component;
an amine-based age resistor represented by the following general formula (1): 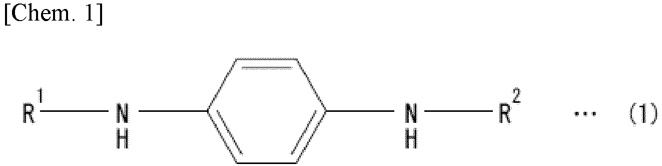 where R¹ and R² being each independently a monovalent saturated hydrocarbon group; and
a quinoline-based age resistor,
wherein a mass ratio of a content of the quinoline-based age resistor to a content of the amine-based age resistor (content of the quinoline-based age resistor/content of the amine-based age resistor) is 0.05 to 0.2.

2. The rubber composition for tires according to claim 1, wherein the rubber component comprises at least one selected from the group consisting of isoprene skeleton rubber, styrene-butadiene rubber, butadiene rubber, and chloroprene rubber.

3. The rubber composition according to claim 1 or 2, wherein a content of the amine-based age resistor is 0.1 parts to 11 parts by mass with respect to 100 parts by mass of the rubber component.

4. The rubber composition for tires according to claim 1 or 2, wherein R¹ and R² in the above general formula (1) are each independently a chain or cyclic monovalent saturated hydrocarbon group having 1 to 20 carbon atoms.

5. The rubber composition for tires according to claim 1 or 2, further comprising a wax, wherein a content of the wax is 0.1 to 5 parts by mass per 100 parts by mass of the rubber component.

6. The rubber composition for tires according to claim 1 or 2, wherein the quinoline-based age resistor comprises a polymer of 2,2,4-trimethyl-1,2-dihydroquinoline.

7. A tire comprising the rubber composition for tires according to any one of claim 1 or 2.
